# EUROPEAN PATENT APPLICATION

(11) **EP 3 540 651 A1**
(43) Date of publication of application: **18.09.2019**
(21) Application number: 18161587.3
(22) Date of filing: 13.03.2018
(51) Int. Cl.: G06K 19/077, G06K 19/07

(54) **RADIO FREQUENCY IDENTIFICATION TAG**

(71) Applicant: 3M Innovative Properties Company, Saint Paul, MN 55133-3427 (US)
(72) Inventor: Münstermann, Mr. Benjamin, 47055 Duisburg (DE); Kühneweg, Mr. Bernd, 40468 Duesseldorf (DE); Schoeppel, Dr. Wolfgang, 41470 Neuss (DE); Hillmann, Dr. Joerg, 58313 Herdecke (DE)
(74) Representative: Müller, Bruno

(57) **Abstract**

Radio frequency identification (RFID) tags including a sensor assembly, an erosion protection layer disposed on the sensor assembly, and an indicator layer are described. The sensor assembly includes a conductive layer disposed on a substrate where the conductive layer includes an antenna portion and a sensor portion electrically coupled to the antenna portion. The indicator layer is disposed on the erosion protection layer over at least a portion of the sensor portion of the conductive layer. The indicator layer has at least one of a relative permeability or a relative permittivity greater than that of the first erosion protection layer at an operating frequency of the RFID tag. The erosion protection layer is disposed between the sensor assembly and the indicator layer. The sensor assembly is responsive to damage to the indicator layer. The substrate may be perforated and the RFID tag may include a foam layer.

## Description

### Background

U.S. Pat. No. 5,942,991 (Gaudreau) describes an apparatus and a related method for remotely measuring at least one environmental condition including an electromagnetically resonant sensor having a measurable resonance characteristic which varies in correspondence to changes in the environmental condition present at the sensor.

U.S. Pat. Appl. Publ. No. 2013/0089463 (Hefner et al.) describes an erosion sensor that can separately monitor erosion and corrosion of a substrate, such as a wind turbine blade or a turbine blade used in devices such as gas turbines, aircraft engines, microturbines, steam turbines. The sensor can provide an erosion indicator based on the erosion of a first element and a corrosion indicator based on the erosion and corrosion of a second element.

U.S. Pat. Appl. Publ. No. 2007/0159346 (Wesselink) describes transponder technology incorporated into the blades of a wind turbine to make it possible to transfer data wirelessly from each blade to the associated tower. By providing a transponder including a radio frequency identification (RFID) device in or on each of the blades and providing a reader/receiver in or on the tower support of the wind turbine, the reader/receiver can detect the operative RFID devices and/or read data from the RFID devices as the blades pass the tower.

U.S. Pat. Appl. Publ. No. 2016/0267769 (Rokhsaz et al.) describes an RFID moisture sensor. This moisture sensor includes one or more antenna structures having a tail. The tail is operable to transport a disturbance such as fluid or moisture from a monitored location where the antenna has an impedance and varies with proximity to the disturbance. An integrated circuit couples to the antenna structure. This IC includes a power harvesting module operable to energize the integrated circuit, an impedance matching engine coupled to the antenna, a memory module, and a wireless communication module. The impedance matching engine may vary a reactive component to reduce a mismatch between the antenna impedance and the IC and produce an impedance value (sensor code) representative of the reactive component impedance. The memory module stores the impedance value (sensor code) until the wireless communication module communicates with an RFID reader and sends the impedance value/sensor code to the RFID reader. The RFID reader may then determine an environmental condition such as the presence of moisture or fluids at the tail of the RFID sensor.

### Summary

In some aspects of the present description, a radio frequency identification (RFID) tag including a sensor assembly, a first erosion protection layer disposed on the sensor assembly, and an indicator layer is provided. The sensor assembly includes a conductive layer disposed on a substrate where the conductive layer includes an antenna portion and a sensor portion electrically coupled to the antenna portion. The indicator layer is disposed on the first erosion protection layer over at least a portion of the sensor portion of the conductive layer. The indicator layer has at least one of a relative permeability or a relative permittivity greater than that of the first erosion protection layer at an operating frequency of the RFID tag. The first erosion protection layer is disposed between the sensor assembly and the indicator layer. The sensor assembly is responsive to damage to the indicator layer.

In some aspects of the present description, a radio frequency identification (RFID) tag including a sensor assembly, an indicator layer and a foam layer is provided. The sensor assembly includes a conductive layer disposed on a substrate where the conductive layer includes an antenna portion and a sensor portion electrically coupled to the antenna portion. The indicator layer is disposed over at least a portion of the sensor portion of the conductive layer. The sensor assembly is responsive to damage to the indicator layer. The sensor assembly is disposed between the indicator layer and the foam layer.

In some aspects of the present description, a radio frequency identification (RFID) tag including a sensor assembly is provided. The sensor assembly includes a conductive layer disposed on a substrate where the conductive layer includes an antenna portion and a sensor portion electrically coupled to the antenna portion. The substrate is perforated. The sensor assembly is embedded in a first erosion protection layer. The first erosion protection layer includes a polymer and the polymer penetrates perforations in the substrate.

### Brief Description of the Drawings

FIG. 1 is a schematic cross-sectional view of a radio frequency identification (RFID) tag;
FIG. 2 is a schematic top view of a sensor assembly;
FIGS. 3-7 are schematic cross-sectional views of RFID tags;
FIG. 8 is a schematic cross-sectional view of an indicator layer;
FIG. 9A is a schematic front view of a wind turbine;
FIG. 9B is a schematic front view of a portion of a rotor blade of the wind turbine of FIG. 9A;
FIG. 10 is a plot of a change in sensor chip capacitance with thickness of an indicator layer or erosion protection layer; and
FIG. 11 is a plot of a change in sensor chip capacitance upon removing material from a sensor assembly.

### Detailed Description

In the following description, reference is made to the accompanying drawings that form a part hereof and in which various embodiments are shown by way of illustration. The drawings are not necessarily to scale. It is to be understood that other embodiments are contemplated and may be made without departing from the scope or spirit of the present description. The following detailed description, therefore, is not to be taken in a limiting sense.

For many applications, installations or devices, it is desired to monitor surfaces subject to physical or environmental exposure. Physical and/or environmental exposure may lead to significant changes of structural properties as well as of other significant physical properties of component(s) of applications, installations or devices. This may be exemplified by a wing of an aircraft and a blade of a wind turbine.

The formation of cracks in a wing of an aircraft can be a significant and immediate safety concern. Similarly, the formation of ice on a wing of an aircraft may not only lead to a blockage of important steering devices such as flaps, but also to a significant deterioration of aerodynamic properties such as a drop of lift the wing provides. Both can represent immediate safety risks. In particular, the formation of ice on aircraft wings was recognized as safety risk in the early pioneering age of motorized flight, and various counter-measures have been developed since, e. g. the spraying of anti-icing liquids and the provision of heating installations within wings. Thus, the observation of damages and/or the formation of ice on the surface of a wing is important during the operation of an aircraft in order to be able to initiate appropriate countermeasures.

The formation of ice on rotor blades of a wind turbine may lead to an increase of vibration and a decrease in lift, which decreases the rotation speed and therefore the power output of the turbine. Generally, the formation of ice on the surface of rotor blades of a wind turbine (also known as "icing") may give rise to problems such as partial or complete loss of power production, reduction of power output due to altered or even disrupted aerodynamics, overloading caused by delayed stall, increased fatigue of components due to imbalance caused by the ice load, and/or damage or harm caused by uncontrolled shedding of large chunks of ice. Therefore, the formation of ice, cracks, or even accumulation of insects on the surface of the wings of a wind turbine trigger both economical and potential safety considerations.

Moreover, the monitoring of surfaces of blades of wind turbines face further challenges in that the blades consistently move, exhibit a large area. Furthermore, wind turbines are often installed in large numbers in remote areas such as in off-shore installations. Accordingly, visual inspections can be difficult, and due to economic considerations, computer-aided electronic solutions are desirable. Methods for monitoring the surface of a device, in particular the surface of a blade of a wind turbine, to physical and/or environmental exposure are described in international application number PCT /US2017/051065.

According to some embodiments of the present description, ultra-high frequency (UHF) radio frequency identification (RFID) tags are provided which are useful in detecting the presence of water or ice and/or useful in detecting whether erosion has occurred. In some embodiments, the RIFD tags can also detect pressure or compressive force applied to the tag though the use of a compressible foam layer which allows an impedance change due to the compression of the foam to be detected. Utilizing a foam layer can also increase the read range of the RFID tag. It is preferred that the RFID tag is a passively operating device. Using a passively operating RFID tag has the advantage that no means for providing electric energy such as batteries or wiring needs to be present in the tag. This has further advantages such as less complexity of the system, the system being less prone to damages or malfunctions, and a generally lighter and more compact RFID tag.

According to some embodiments of the present description, it has been found that including an indicator layer in the RFID tag allows improved sensitivity to erosion and allows a specific state of erosion to trigger appropriate repair actions. It is typically preferred that an erosion protection layer is disposed over antenna and sensor portions of the RFID tag and that the indicator layer be disposed on an exterior of the erosion protection layer. The erosion of the indicator layer can be detected and when it has been sufficiently eroded (e. g., completely eroded away in some areas), it can be an indication that maintenance is needed. The erosion protection layer under the indicator layer protects the antenna and sensor portions of the RFID tag after erosion of the indicator layer. This allows maintenance to be delayed for a time so that, for example, multiple repairs can take place at a convenient time. It is further preferred that another erosion protection layer is disposed over the indicator layer. This increases the time between needed repairs. In some embodiments, repair can be carried out by applying new indicator material where the indicator layer has been eroded and applying a new erosion protection layer over the new indicator material.

Utilizing separate erosion protection layers and indicator layers has been found to provide substantially better performance than using a single layer for both erosion protection and erosion sensing. For example, it has been found that a polymer filled with dielectric particles provide a slope of the capacitance change of the sensor with thickness more than twice that of a polymeric erosion protection layer. Polymeric erosion protection layers are typically elastomeric polymers with a high elongation at break. Incorporating dielectric particles in such a polymer reduces the elongation at break and degrades the layer's ability to protect against erosion. Utilizing separate erosion protection layers and indicator layers allows the erosion protection provided by the erosion protection layer to be maintained and allows improved sensitivity to erosion.

In some embodiments, a first erosion protection layer is disposed on a sensor assembly, an indicator layer is disposed on the first erosion protection layer, and a second erosion protection layer is disposed on the indicator layer and on the first erosion protection layer. In some embodiments, the indicator layer is encapsulated between the first and second erosion protection layers.

In some cases, it is may be desired to increase the delamination resistance of the first erosion protection layer applied to the sensor assembly. For example, when erosion protection layers (e. g., elastomeric polyurethane) are applied to a sensor assembly utilizing a conductive layer on a substrate (e. g., polyimide) where the conductive layer has a large open area fraction (e. g., using a loop antenna geometry), the erosion protection layer may not have a bond with the substrate as strong as desired for some application. It has been found that perforating the substrate can result in improved bonding of the erosion protection layer to the sensor assembly.

In some embodiments, a system (e. g., wind turbine) including at least one reader and at least one RFID tag is provided. In preferred embodiments, an operating frequency of the system is in the ultra-high frequency (UHF) band which is defined by the International Telecommunications Union (ITO) as the band from 300 MHz to 3000 MHz. In some embodiments, the operating frequency is in a range of from 700 to 1500 MHz, or preferably in a range of from 850 to 950 MHz, or more preferably in a range of from 865 to 928 MHz. For example, in some embodiments, the operating frequency is in the industrial, scientific and medical (ISM) band from 902 MHz to 928 MHz (e. g., 915 MHz). Frequency dependent quantities can be understood to be evaluated at the operating frequency unless specified differently or unless the context clearly indicates differently.

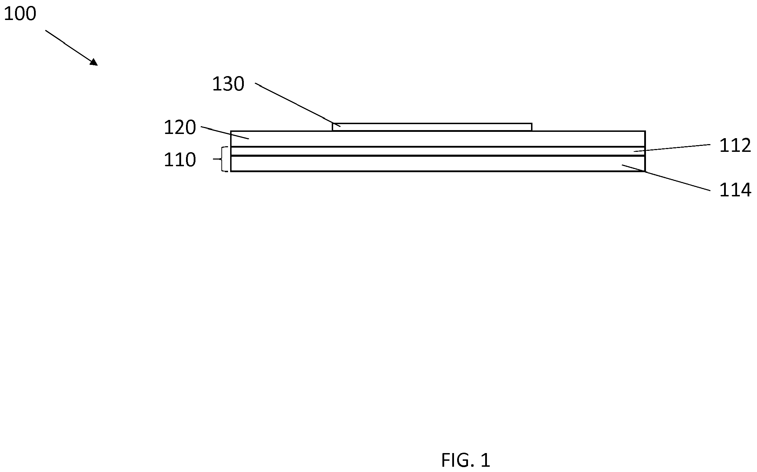

FIG. 1 is a schematic cross-sectional view of a radio frequency identification (RFID) tag 100 including a sensor assembly 110, a first erosion protection layer 120 disposed on the sensor assembly 110, and an indicator layer 130 disposed on the first erosion protection layer 120. The sensor assembly 110 includes a conductive layer 112 disposed on a substrate 114. As described further elsewhere herein, the conductive layer 112 is typically patterned to provide an antenna portion and a sensor portion electrically connected to the sensor portion. The sensor portion is typically sensitive to the presence or the amount (e. g., layer thickness) of at least one of magnetic or dielectric material proximate the sensor portion. The indicator layer 130 covers at least a portion sensor portion so that the sensor portion is sensitive to damage (e. g., loss of material via erosion) to the indicator layer. For example, the damage may be erosion that reduces the thickness of the indicator layer and the sensor portion may be sensitive the thickness of the indicator layer. Indicator layer 130, and other indicator layers of the present description, may be or include dielectric and/or magnetic materials as described further elsewhere herein. The first erosion protection layer 120, and other erosion protection layers of the present description, may be or include polyurethane, for example.

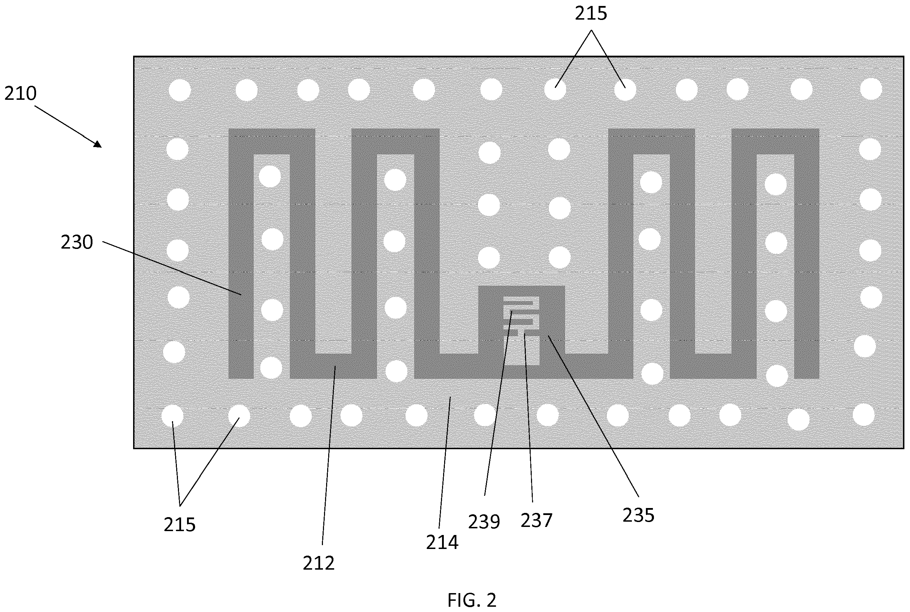

FIG. 2 is a schematic top view of a sensor assembly 210 which may correspond to sensor assembly 110. Sensor assembly 210 includes a conductive layer 212 disposed on a substrate 214. The conductive layer 212 is patterned to provide an antenna portion 230 and a sensor portion 235 electrically coupled to the antenna portion 230. In the illustrated embodiment, the substrate 214 includes perforations 215. Such perforations have been found to improve bonding with an erosion protection layer as described further elsewhere herein. In other embodiments, the substrate is not perforated. Sensor portion 235 includes terminals 237 for attaching a chip and includes interdigitated capacitive sensor 239. When an RFID tag including the sensor assembly is disposed on an article such as a wind turbine blade, the conductive layer 212 typically faces away from the article and the substrate 214 typically faces the article.

Other antenna designs and sensor designs known in the art may be used. The antenna may be a conventional dogbone design, may include one or more loops, and/or may include one or more meandered elements, for example.

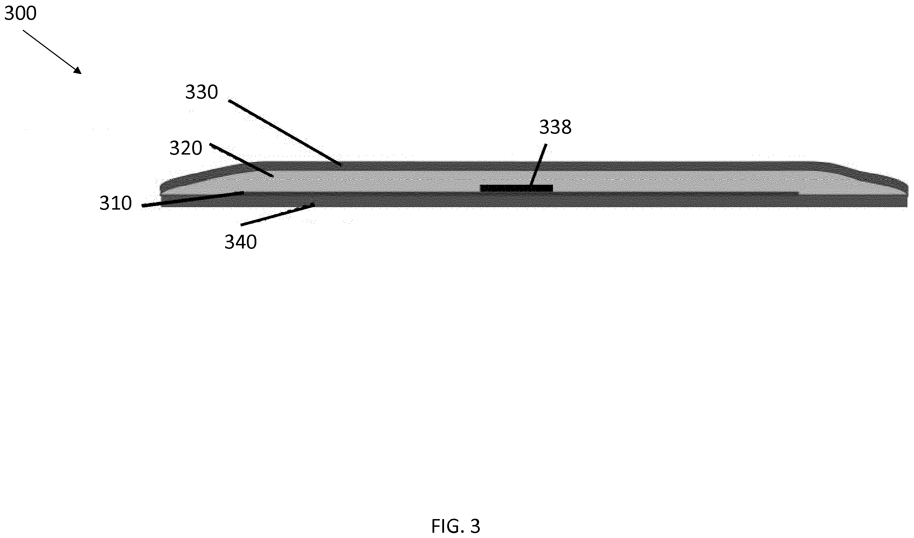

FIG. 3 is a schematic cross-sectional view of a radio frequency identification (RFID) tag 300 including a sensor assembly 310, a first erosion protection layer 320 disposed on the sensor assembly 310, and an indicator layer 330 disposed on the first erosion protection layer 320. The sensor assembly 310 may correspond to sensor assembly 110 or 210, for example, and includes a chip 338 which is attached to terminals in a sensor portion of the sensor assembly 310. An adhesive layer 340, which may be a pressure sensitive adhesive (PSA), is included for attaching the RFID tag 300 to a substrate such as a rotor blade of a wind turbine or an aircraft wing. Chip 338 preferably includes a reactance autotuning integrated circuit as described further elsewhere herein. The sensor assembly 310 is responsive to damage to the indicator layer 330. For example, the sensor assembly 310 may be responsive (e. g., capacitance change at the terminals) to loss of material of the indicator layer 330 through erosion.

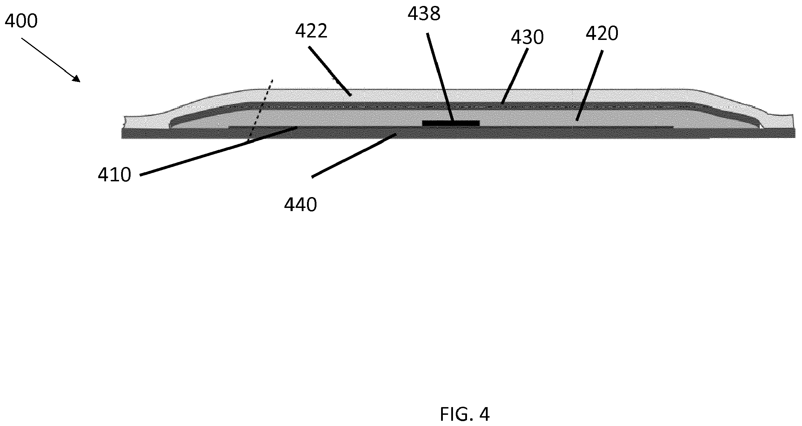

FIG. 4 is a schematic cross-sectional view of a radio frequency identification (RFID) tag 400 including a sensor assembly 410, a first erosion protection layer 420 disposed on the sensor assembly 410, an indicator layer 430 disposed on the first erosion protection layer 420, and a second erosion protection layer 422 disposed the erosion protection layer. RFID tag 400 includes chip 438 and adhesive layer 440. Elements 410, 420, 430, 438, and 440 may be as described for 310, 320, 330, 338, and 340, respectively. The indicator layer 430 is disposed between, and encapsulated by, the first and second erosion protection layers 420 and 422. In some embodiments, an erosion protection tape is applied over the second erosion protection layer 422. In some embodiments, the second erosion protection layer 422 is a portion of an erosion protection tape. For example, an article (e. g., a rotor blade of a wind turbine or an aircraft wing) may include an aerodynamic surface where one or more RFID tags 300 is disposed on the aerodynamic surface and an erosion protection tape (e. g., a leading-edge protection tape such as 3M Wind Blade Protection Tape W8607 or 3M Wind Blade Protection Tape W8750 both available from 3M Company, St. Paul, MN, USA) is disposed on the one or more RFID tags opposite the aerodynamic surface. In this case, for each RFID tag 300, the indicator layer 330 is encapsulated between the first erosion protection layer 320 and the erosion protection tape which corresponds to second erosion protection layer 422.

In some embodiments, a foam layer is used adjacent the sensor assembly. For example, in some embodiments, the adhesive layer 340 or 440 is a foam adhesive layer. Utilizing a foam layer can improve an RFID tag's read range when the RFID tag is disposed on substrate which has significant dielectric loss at the operating frequency of the RFID tag, since a foam layer, in some embodiments, has a low dielectric loss due to a substantial volume of the foam being air. In some embodiments, the foam is made from an insulating material such as a polymer. In some embodiments, the foam is compressible. In some such embodiments, incorporating a foam layer allows compressive stresses to be detected. For example, applying pressure to the RFID tag when it is disposed on a rotor blade, for example, pushes the sensor portion closer to the rotor blade so that a higher relative permittivity material (the rotor blade compared to the uncompressed foam) is present near the sensor portion. This allows pressure to be determined from a change in capacitance detected by the sensor portion.

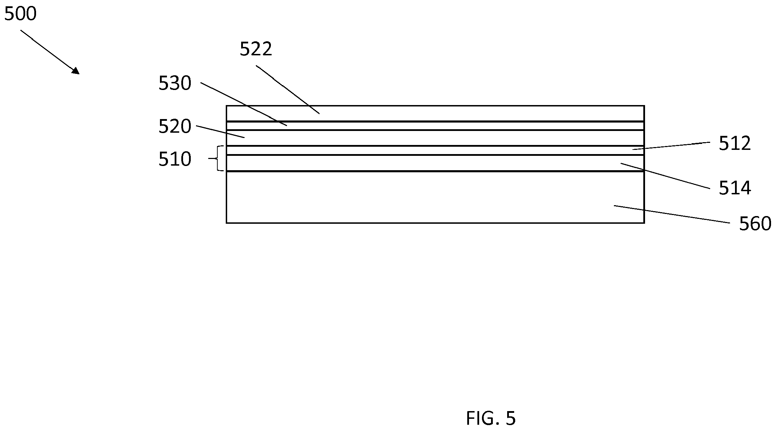

An example of an RFID tag including a foam layer is illustrated in FIG. 5. FIG. 5 is a schematic cross-sectional view of a radio frequency identification (RFID) tag 500 including a sensor assembly 510, a first erosion protection layer 520 disposed on the sensor assembly 510, an indicator layer 530 disposed on the first erosion protection layer 520, a second erosion protection layer 522 disposed on the indicator layer 530. The sensor assembly 510 includes a conductive layer 512 disposed on a substrate 514 and may correspond to sensor assembly 210 or 310, for example. The sensor assembly 510 is disposed on a foam layer 560. The sensor assembly 510 is disposed between the indicator layer 530 and the foam layer 560. In some embodiments, the foam layer 560 has a thickness of at least 300 micrometers, or at least 500 micrometers, or at least 1 mm. In some embodiments, the thickness can be up to 5 mm, for example. Suitable materials for foam layer 560 include, for example, acrylic foams, polyolefin foams, and polyethylene foams.

In some embodiments, the sensor assembly of the RFID tag includes a conductive layer disposed on a substrate. The conductive layer is typically patterned to provide an antenna portion and a sensor portion. In some embodiments, a substantial fraction of the conductive layer is removed in forming the antenna and sensor portions leaving substantial open areas of the substrate exposed. In some cases, an erosion protection layer disposed on the sensor assembly has a relatively weak bonding to the substrate and this can cause lower delamination resistance than desired in some applications when the open areas of the substrate are large, for example. One approach to improving delamination resistance is to remove the portion of the substrate not covered by the remaining conductor so that the erosion protection layer penetrates through spaces between the conductor to a surface below. For example, the sensor assembly can be placed between two erosion protection films under heat and pressure to encapsulate the sensor assembly in an erosion protection layer. However, in some embodiments, the substrate is needed to provide dimensional stability to the conductor layer and when the portion of the substrate not covered by the conductor is removed, the conductor has a poor dimensional stability and it loses its desired shape during the processes of encapsulating the RFID tag in the erosion protection layer. This can adversely affect the performance of the RFID tag (e. g., poorer read range). However, it has been found that perforating the substrate can result in improved delamination performance compare to the RFID tag with a continuous substrate and improved dimensional stability compared to the RFID tag where the substrate not covered by conductor has been removed.

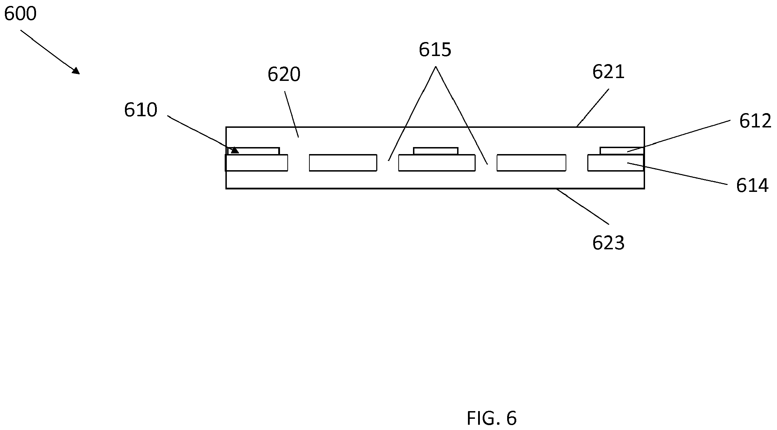

An example of an RFID tag embedded in an erosion protection layer is provided in FIG. 6. FIG. 6 is a schematic cross-sectional view of a radio frequency identification (RFID) tag 600 including a sensor assembly 610 which includes a conductive layer 612 and a substrate 614 which is perforated. The RFID tag 600 includes a first erosion protection layer 620 and the sensor assembly 610 is embedded in the first erosion protection layer 620. In some embodiments, the first erosion protection layer 620 is or includes a polymer and the polymer penetrates perforations 615 in the substrate 614. Sensor assembly 610 may correspond to sensor assembly 210 or 310, for example. RFID tag 600 can be made by disposing sensor assembly 610 between first and second erosion protection films and applying heat and pressure to cause the first and second films to flow together through the perforations 615 to provide a first erosion protection layer 620 in which the sensor assembly 610 is embedded. In some embodiments, RFID tag 600 further includes an indicator layer (e. g., disposed on outer surface 621) and/or a foam layer (e. g., disposed on outer surface 623) as described further elsewhere herein.

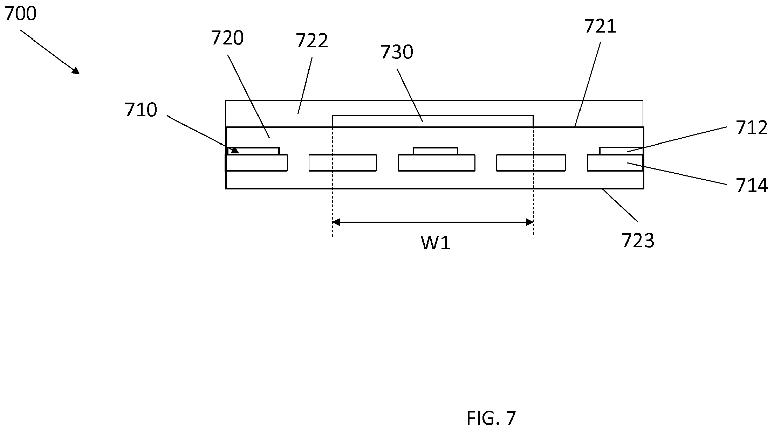

FIG. 7 is a schematic cross-sectional view of a radio frequency identification (RFID) tag 700 including a sensor assembly 710 which includes a conductive layer 712 and a substrate 714 which is perforated. The RFID tag 700 includes a first erosion protection layer 720 as described for RFID tag 600. RFID tag 700 is similar to RFID tag 600 except for the inclusion of an indicator layer 730 and a second erosion protection layer 722. The indicator layer 730 is disposed on an outer surface 721 of the first erosion protection layer 720. In some embodiments, the second erosion protection layer 722 is made of the same material (e. g., polyurethane) as the first erosion protection layer 720. In the illustrated embodiment, the indicator layer 730 is encapsulated between the first and second erosion protection layers 720 and 722. The indicator layer 703 disposed over at least a portion of the sensor portion of the conductive layer 712. The indicator layer 730 may partially cover or fully cover the sensor portion of the conductive layer 712. For example, the indicator layer 730 has a width W1 and in some embodiments, the sensor portion has a width greater than W1 so that the indicator layer 730 only partially convers the sensor portion, while in other embodiments, the sensor portion has a width smaller than W1 and the indicator layer 730 may fully cover the sensor portion. Similarly, the indicator layer 730 may partially cover or fully cover the conductive layer 712. A foam layer and/or an adhesive layer may be disposed on outer surface 723 of first erosion protection layer 720.

Techniques to manufacture radio frequency identification (RFID) tags known in the art can be used to make the sensor assemblies of the present description. For example, the sensor assemblies can be made by patterning (e. g., by chemical etching) a metal layer (e. g., copper or silver) disposed on a flexible polymeric substrate (e. g., polyimide, polyethylene terephthalate, or polyetherimide). The metal layer may have a thickness in the range of 10 micrometers to 100 micrometers, or 10 micrometers to 50 micrometers, or 10 micrometers to 25 micrometers, for example. The substrate is preferably sufficiently flexible that the RFID tag can be disposed on and conform to the surface on which it is desired to attach the RFID tag. For example, polyimide having a thickness of no more than 50 micrometers (e. g., about 25 micrometers) is sufficiently flexible for many surfaces of interest (e. g., surface of a rotor blade or aircraft wing). Alternatively, sensor assemblies can be made by printing a conductive material (e. g., inkjet printable conductive inks (e. g., containing silver nanoparticles) or screen-printable silver paste) onto a flexible polymeric substrate.

Suitable materials for the erosion protection layer(s) include elastomers such as polyurethane-based elastomers and silicone-based elastomers. Example materials include 3M Wind Blade Protection Coating W4600 available from 3M Company, St. Paul, MN, USA. It is typically preferred that the erosion protection layer be an elastomer having a large elongation at break. In some embodiments, the erosion protection layer has an elongation at break of greater than 100 %, or greater than 200 %, or greater than 300 %, or greater than 500 %, or greater than 600 %. In some embodiments, the erosion protection layer, has an elongation at break in a range of 200 % to 3000 %. 3M Wind Blade Protection Coating W4600 has an elongation at break above 600 %. Other useful erosion protection materials include 3M Wind Blade Protection Coating W4601, 3M Wind Blade Protection Tape W8607, and 3M Wind Blade Protection Tape W8750 all available from 3M Company, St. Paul, MN, USA and all having an elongation at break above 600 %.

The indicator layer preferably is or comprises a dielectric material and/or a magnetic material. A dielectric material is a material having a significant dielectric response (e. g., relative permittivity greater than that of air, or greater than 1.1, or greater than 2, or preferably greater than 4, or more preferably greater than 5) at the operating frequency of the RFID tag. A magnetic material is a material having a significant magnetic response (e. g., relative permeability greater than that of air, or greater than 1.1, or preferably greater than 2, or more preferably greater than 3) at the operating frequency of the RFID tag. Relative permittivity and relative permeability refers to the real parts of the complex relative permittivity and complex relative permeability, respectfully, except where indicated otherwise or the where context clearly indicates differently. In some embodiments, the indicator layer has at least one of a relative permeability or a relative permittivity greater than that of the first erosion protection layer at an operating frequency of the RFID tag. Useful magnetic materials include ferromagnetic materials or materials containing ferromagnetic particles. For example, silicon carbide particles or ferromagnetic particles commercially available under Bayferrox powder (Bayer AG, Leverkusen, Germany) or Sendust. Useful dielectric materials include barium titanate, lead zirconate titanate, titanium dioxide, and carbonyl iron. Some materials have significant dielectric response and significant magnetic response and may be characterized as dielectric materials or magnetic material or dielectric/magnetic materials. In some embodiments, the indicator layer is electrically insulating.

In some embodiments, at the operating frequency, the indicator layer has at least one of a relative permittivity or a relative permeability that greater than the corresponding relative permittivity or relative permeability of the first erosion protection layer by at least 1 or at least 2 at the operating frequency. For example, in some embodiments, at the operating frequency, the relative permittivity of the indicator layer is greater than 1 plus the relative permittivity of the first erosion protection layer (e. g., in some embodiments, the indicator layer has a relative permittivity greater than 5 and the first erosion protection layer has a relative permittivity less than 4 at the operating frequency).

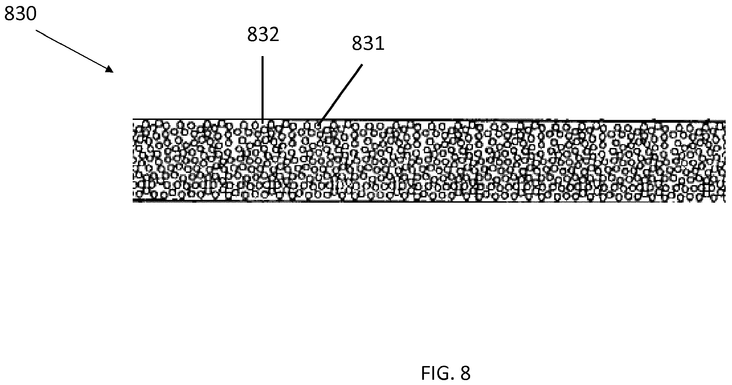

In some embodiments, the indicator layer includes a plurality of particles dispersed in a matrix which may be polymer. The polymer may be an elastomeric polyurethane and/or may be the same as a material as used in an erosion protection layer. The particles may be dielectric and/or magnetic particles. This is illustrated in FIG. 8 which is a schematic cross-sectional view of an indicator layer 830 which includes particles 831 dispersed in a polymer 832. In preferred embodiments, the particles 831 are dielectric particles having a relative permittivity higher than that of the polymer 832. The relative permittivity and permeability of the indicator layer 830 can be determined from coaxial S-parameter characterization using the Nicholson Ross algorithm.

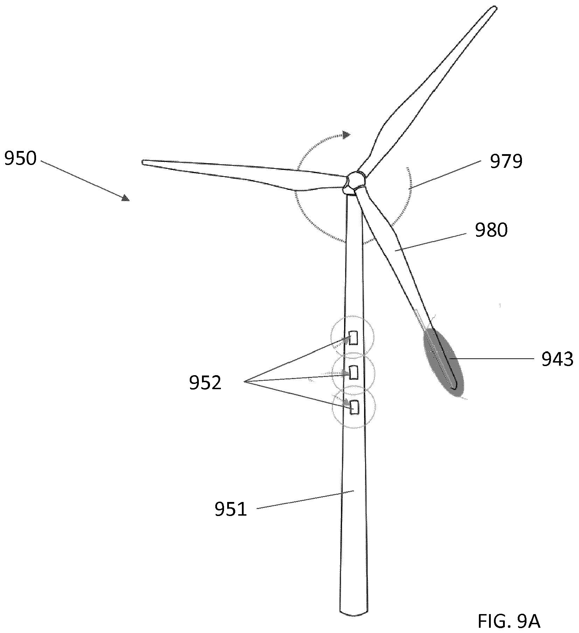

FIG. 9A is a schematic illustration of a wind turbine 950 including three rotor blades 980. In other embodiments, more than three rotor blades or less than three rotor blades may be utilized. At least one, and in some embodiments all, of the rotor blades 980 includes at least one RFID tag disposed on the surface of the rotor blade. In some embodiments, the wind turbine includes one or more readers disposed proximate the at least one RFID tag. In some embodiments, the one or more RFID readers are configured to transmit power to the one or more RFID tags and to receive information on the presence of at least one of erosion or ice buildup from the received information. For example, the received information may include the identification of the state of the RFID tag which may include the input impedance of the sensor portion of the RFID tag from which at least one of erosion or ice buildup can be determined.

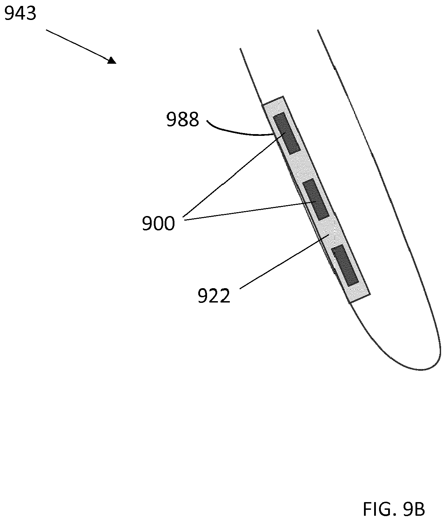

A plurality of readers 952 are disposed on a tower 951 of the wind turbine 950 in the illustrated embodiment. In some embodiments, a plurality of RFID tags is disposed on and conforms to the curved major surface of each rotor blade 980. In some embodiments, the wind turbine includes a plurality of readers 952 disposed proximate the RFID tags. In some embodiments, for each rotor blade 980, a plurality of RFID tags is disposed on and conforms to a curved major surface of the rotor blade 980 and is in one-to-one correspondence with the plurality of readers 952. For example, the region 943, which is illustrated in FIG. 9B, includes three RFID tags 900 covered by erosion protection tape 922 which provides a second erosion protection layer for the RDIF tags as described elsewhere herein. A direction of rotation 979 is indicated. In preferred embodiments, the RFID tags 900 are disposed on or near the leading edge 988 of the rotor blade.

In some embodiments, the RFID tag includes a chip attached to the terminal of the sensor portion. In some embodiments, the chip includes an integrated circuit. In some embodiments, the chip includes a reactance autotuning integrated circuit which may be referred to as adaptive circuitry. Preferably, the reactance autotuning integrated circuit includes a radio frequency identification (RFID) unit. Typically, such an RFID unit includes radio frequency (RF) circuits, logic, and memory. In some embodiments, the reactance autotuning integrated circuit, in particular the RFID unit, functions in response to an RF signal, in particular to a uniquely coded RF signal. For instance, if the RFID tag including the chip is placed into an RF field including the RF signal, the RFID unit becomes stimulated and transmits a uniquely coded signal. In some embodiments, the chip is configured to report changes in impedance using a multi-bit sensor code.

In some embodiments, the reactance autotuning integrated circuit including the RFID sensing unit includes an inductor, preferably to match or substantially match the chip impedance to the input impedance at the terminals of the RFID tag. In some embodiments, the reactance autotuning integrated circuit including the RFID sensing circuit includes a variable input capacitor, which allows for optimizing the impedance matching of the chip impedance to the input impedance at the terminals of the RFID tag. Preferably, the autotuning function of the chip minimizes the return loss at the terminals and saves the encoded/digital value of the capacitance into the memory of the chip. This has the effect that indirect measurements of the impedance may be carried out. This measurement principle has the further advantage that measurement of material presence having significant dielectric or magnetic response at the system frequency becomes possible. Accordingly, this allows the detection of wear or erosion of material (e. g., of an indicator layer) and the detection of ice buildup.

It is preferred that the sensor portion includes a sensor having a capacitor element having a capacitance which changes if the field lines through the capacitor element cross high permittivity materials. For example, in some embodiments, the sensor portion includes a patterned conductor providing a capacitance at the terminals, where the capacitance depends on an amount of a dielectric material present on the sensor portion, for example. In some embodiments, the patterned conductor defines capacitive fingers which provides the capacitance at the terminals. High permittivity materials are these commonly known in the art, such as water having a relative permittivity of about 80. When the field lines between the electrodes of the capacitor element cross high permittivity materials such as water, the capacitance of the sensor portion increases. This increase of the capacitance will be compensated by a decrease of capacitance of the autotuning integrated circuit. Accordingly, this is equivalent to a digitized capacitance value, and in the present example, will also result in a lower sensor code. Accordingly, it is possible to detect the presence of water with the reactance autotuning integrated circuit. Moreover, the dielectric properties of water change substantially at UHF frequencies (e. g., frequencies in the range of from 865 to 928 MHz) if the water freezes, which may result in a higher sensor code allowing the detection of ice.

In some embodiments, the RFID tag is also configured to detect temperature. For example, the RFID tag may contain a chip containing a temperature sensor (e. g., utilizing a temperature sensitive diode). In combination with the detection of the presence of water, the measured temperature allows for the determination of the formation of ice on the surface. In some embodiments, a system including a reader and an RFID tag determines a temperature and a change in impedance over time which allows a buildup of ice to be detected.

Useful chips (e. g., with a reactance autotuning integrated circuit) that can be incorporated into the RFID tags of the present description are known in the art. For example, such chips are described in U.S. Pat. Appl. Publ. No. 2016/0267769 (Rokhsaz et al.). Useful chips include the Magnus® S chips available from RFMicron (Austin, TX).

The following is a list of exemplary embodiments of the present description.

Embodiment 1 is a radio frequency identification (RFID) tag comprising:
a sensor assembly comprising a conductive layer disposed on a substrate, the conductive layer comprising an antenna portion and a sensor portion electrically coupled to the antenna portion;
a first erosion protection layer disposed on the sensor assembly; and
an indicator layer disposed on the first erosion protection layer over at least a portion of the sensor portion of the conductive layer, the indicator layer having at least one of a relative permeability or a relative permittivity greater than that of the first erosion protection layer at an operating frequency of the RFID tag, the first erosion protection layer between the sensor assembly and the indicator layer, the sensor assembly being responsive to damage to the indicator layer.

Embodiment 2 is the RFID tag of Embodiment 1, wherein the indicator layer fully covers the sensor portion.

Embodiment 3 is the RFID tag of Embodiment 1, wherein the indicator layer fully covers the conductive layer.

Embodiment 4 is the RFID tag of Embodiment 1 further comprising a second erosion protection layer, wherein the indicator layer is disposed between the first and second erosion protection layers.

Embodiment 5 is the RFID tag of Embodiment 1, wherein the indicator layer comprises a plurality of dielectric particles dispersed in a polymer.

Embodiment 6 is the RFID tag of Embodiment 1, wherein the sensor portion comprises a capacitor having a capacitance dependent on a thickness of the indicator layer.

Embodiment 7 is the RFID tag of Embodiment 1 further comprising a foam layer, the sensor assembly being disposed between the indicator layer and the foam layer.

Embodiment 8 is the RFID tag of Embodiment 1, wherein the substrate is perforated, the sensor assembly is embedded in the first erosion protection layer, the first erosion protection layer comprises a polymer, and the polymer penetrates perforations in the substrate.

Embodiment 9 is the RFID tag of Embodiment 1 being configured to detect the presence of at least one of erosion or ice buildup.

Embodiment 10 is the RFID tag of any one of Embodiments 1 to 9, wherein the operating frequency is in a range of 865 to 928 MHz.

Embodiment 11 is the RFID tag of any one of Embodiments 1 to 10, wherein at the operating frequency, the relative permittivity of the indicator layer is greater than 1 plus the relative permittivity of the first erosion protection layer.

Embodiment 12 is an article comprising an aerodynamic surface, wherein one or more RFID tags according to any one of Embodiments 1 to 11 is disposed on the aerodynamic surface and an erosion protection tape is disposed on the one or more RFID tags opposite the aerodynamic surface.

Embodiment 13 is a radio frequency identification (RFID) tag comprising:
a sensor assembly comprising a conductive layer disposed on a substrate, the conductive layer comprising an antenna portion and a sensor portion electrically coupled to the antenna portion;
an indicator layer disposed over at least a portion of the sensor portion of the conductive layer, the sensor assembly being responsive to damage to the indicator layer; and
a foam layer, the sensor assembly being disposed between the indicator layer and the foam layer.

Embodiment 14 is the RFID tag of Embodiment 13, wherein the sensor assembly is responsive to a pressure applied to the RFID tag.

Embodiment 15 is the RFID tag of Embodiment 13 or 14 further comprising a first erosion protection layer disposed between the indicator layer and the sensor assembly.

Embodiment 16 is the RFID tag of Embodiment 15, further comprising a second erosion protection layer, the indicator layer disposed between the second erosion protection layer and the first erosion protection layer.

Embodiment 17 is an article comprising an aerodynamic surface, wherein one or more RFID tags according to Embodiment 15 or 16 is disposed on the aerodynamic surface and an erosion protection tape is disposed on the one or more RFID tags opposite the aerodynamic surface, wherein for each RFID tag, the indicator layer is encapsulated between the first erosion protection layer and the erosion protection tape.

Embodiment 18 is a radio frequency identification (RFID) tag comprising:
a sensor assembly comprising a conductive layer disposed on a substrate, the conductive layer comprising an antenna portion and a sensor portion electrically coupled to the antenna portion, the substrate being perforated, the sensor assembly being embedded in a first erosion protection layer, the first erosion protection layer comprising a polymer, the polymer penetrating perforations in the substrate.

Embodiment 19 is the RFID tag of Embodiment 18, wherein the sensor assembly is disposed on a foam layer.

Embodiment 20 is the RFID tag of Embodiment 18, wherein the substrate is configured to provide dimensional stability to the conductive layer.

Embodiment 21 is the RFID tag of any one of Embodiments 18 to 20 further comprising an indicator layer disposed on an outer surface of the first erosion protection layer over at least a portion of the sensor portion of the conductive layer, the sensor assembly being responsive to damage to the indicator layer.

Embodiment 22 is the RFID tag of Embodiment 21 further comprising a second erosion protection layer, the indicator layer disposed between the second erosion protection layer and the outer surface of the first erosion protection layer.

Embodiment 23 is an article comprising an aerodynamic surface, wherein one or more RFID tags according to Embodiment 21 is disposed on the aerodynamic surface and an erosion protection tape is disposed on the one or more RFID tags opposite the aerodynamic surface, wherein for each RFID tag, the indicator layer is encapsulated between the first erosion protection layer and the erosion protection tape.

Embodiment 24 is a wind turbine comprising one or more rotor blades, each rotor blade being an article according to any one of Embodiments 12, 17 or 23.

Embodiment 25 is the wind turbine of Embodiment 24 further comprising one or more RFID readers configured to transmit power to the one or more RFID tags and to receive information on the presence of at least one of erosion or ice buildup therefrom.

Embodiment 26 is the RFID tag of any one of Embodiments 1 to 11, or 13 to 16, or 21 to 22, wherein the sensor portion comprises terminals attached to a chip comprising a reactance autotuning integrated circuit, and wherein the sensor assembly is responsive to a loss of material of the indicator layer through erosion via a change in capacitance at the terminals.

Embodiment 27 is the RFID tag of Embodiment 26, wherein the sensor assembly is responsive to ice buildup on the RFID tag via a change in capacitance at the terminals.

### Examples

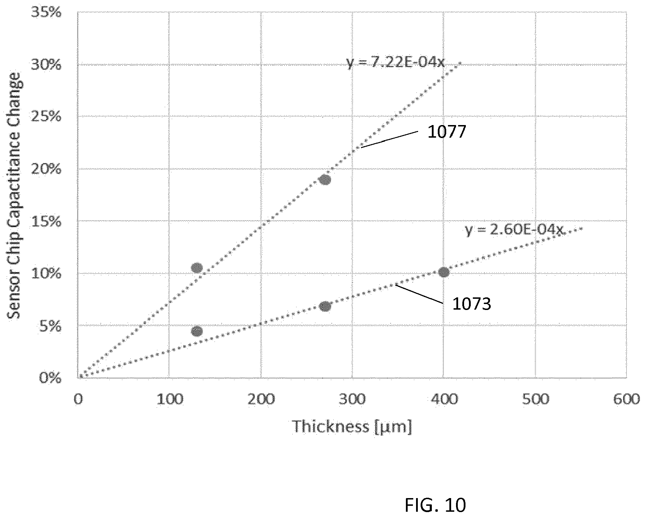

Multilayer tape testing was carried out using cured layers of W4600 erosion protection coating and cured indicator layers using W4600 as polymeric matrix material and carbonyl iron powder (CIP) as dielectric particles at 50 weight percent (about 10 volume percent) dispersed in the polymer. The separate cured layers were laminated under temperature using a blow-dryer at temperatures > 200 °C. Different thickness were tested to extract a sensor chip capacitance change depending on the layer thickness by disposing the layer on a sensor assembly similar to the SMARTRAC SENSOR DOGBONE and using an RFID reader and an antenna from a reading distance of 2 m to detect the sensor response. The result is shown in FIG. 10 for the erosion protection layer (1073) and for the indicator layer (1077). The slope of the percent change in capacitance versus thickness was 0.0722 %/µm for the indicator layer and 0.026 %/µm for the erosion protection layer. The indicator layer increased the sensor response by a factor of about 2.77.

To test the sensitivity of an RFID tag including the indicator layer to erosion, a sensor assembly similar to the SMARTRAC SENSOR DOGBONE moisture level sensing inlay was combined with a 200 µm W4600 first erosion protection layer and attached to a lab-scale demo wind blade using a PSA of∼250 µm thickness. A 130 µm/130 µm layup of indicator layer and second erosion protection film was laminated on top of the first erosion protection layer.

To imitate a material loss of about 55 %, the top two layers (second erosion protection film and indicator layer) were peeled off the construction while the sensor response was monitored. For comparison, another sensor assembly was prepared with a first erosion protection layer as described above, and in place of the 130 µm/130 µm layup of indicator layer and second erosion protection film, a 270 µm thick layer of W4600 was applied over the first erosion protection layer. The 270 µm thick layer of W4600 was peeled off the construction while the sensor response was monitored. In both cases, the sensor response was picked up using an RFID reader and an antenna from a reading distance of 2 m.

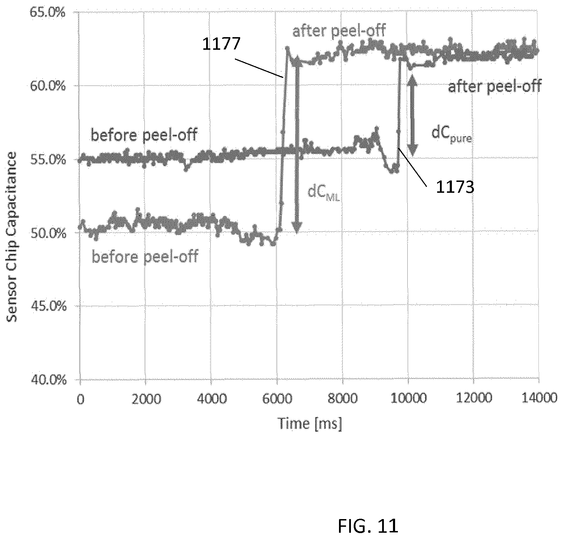

The change in sensor chip capacitance with time for the peel-off experiments are shown in FIG. 11 for the 270 µm thick layer of W4600 (curve 1173) and for the indicator layer/second erosion protection layer (curve 1177). The rise of sensor chip capacitance was related to the loss of material in the sensing area. The responsiveness was substantially greater when the indicator material was included. To quantify the effect, the sensor response was normalized to a 1 mm layer thickness and compared with using a single material. For the erosion protection layer without the indicator layer the sensor response per 1 mm thickness was 26 %, for the indicator layer/second erosion protection layer layup the sensor response per 1 mm thickness was 45 %, and for the indicator layer alone the sensor response per 1 mm thickness was 72 %.

All references, patents, and patent applications referenced in the foregoing are hereby incorporated herein by reference in their entirety in a consistent manner. In the event of inconsistencies or contradictions between portions of the incorporated references and this application, the information in the preceding description shall control.

Descriptions for elements in figures should be understood to apply equally to corresponding elements in other figures, unless indicated otherwise. Although specific embodiments have been illustrated and described herein, it will be appreciated by those of ordinary skill in the art that a variety of alternate and/or equivalent implementations can be substituted for the specific embodiments shown and described without departing from the scope of the present disclosure. This application is intended to cover any adaptations or variations of the specific embodiments discussed herein. Therefore, it is intended that this disclosure be limited only by the claims and the equivalents thereof.

## Claims

1. A radio frequency identification (RFID) tag comprising:
a sensor assembly comprising a conductive layer disposed on a substrate, the conductive layer comprising an antenna portion and a sensor portion electrically coupled to the antenna portion;
a first erosion protection layer disposed on the sensor assembly; and
an indicator layer disposed on the first erosion protection layer over at least a portion of the sensor portion of the conductive layer, the indicator layer having at least one of a relative permeability or a relative permittivity greater than that of the first erosion protection layer at an operating frequency of the RFID tag, the first erosion protection layer between the sensor assembly and the indicator layer, the sensor assembly being responsive to damage to the indicator layer.

2. The RFID tag of claim 1 further comprising a second erosion protection layer, wherein the indicator layer is disposed between the first and second erosion protection layers.

3. The RFID tag of claim 1, wherein the sensor portion comprises a capacitor having a capacitance dependent on a thickness of the indicator layer.

4. The RFID tag of claim 1 further comprising a foam layer, the sensor assembly being disposed between the indicator layer and the foam layer.

5. The RFID tag of claim 1, wherein the substrate is perforated, the sensor assembly is embedded in the first erosion protection layer, the first erosion protection layer comprises a polymer, and the polymer penetrates perforations in the substrate.

6. An article comprising an aerodynamic surface, wherein one or more RFID tags according to any one of claims 1 to 5 is disposed on the aerodynamic surface and an erosion protection tape is disposed on the one or more RFID tags opposite the aerodynamic surface.

7. A radio frequency identification (RFID) tag comprising:
a sensor assembly comprising a conductive layer disposed on a substrate, the conductive layer comprising an antenna portion and a sensor portion electrically coupled to the antenna portion;
an indicator layer disposed over at least a portion of the sensor portion of the conductive layer, the sensor assembly being responsive to damage to the indicator layer; and
a foam layer, the sensor assembly being disposed between the indicator layer and the foam layer.

8. The RFID tag of claim 7 further comprising a first erosion protection layer disposed between the indicator layer and the sensor assembly.

9. The RFID tag of claim 8, further comprising a second erosion protection layer, the indicator layer disposed between the second erosion protection layer and the first erosion protection layer.

10. A radio frequency identification (RFID) tag comprising:
a sensor assembly comprising a conductive layer disposed on a substrate, the conductive layer comprising an antenna portion and a sensor portion electrically coupled to the antenna portion, the substrate being perforated, the sensor assembly being embedded in a first erosion protection layer, the first erosion protection layer comprising a polymer, the polymer penetrating perforations in the substrate.

11. The RFID tag of claim 10, wherein the sensor assembly is disposed on a foam layer.

12. The RFID tag of claim 10 or 11 further comprising an indicator layer disposed on an outer surface of the first erosion protection layer over at least a portion of the sensor portion of the conductive layer, the sensor assembly being responsive to damage to the indicator layer.

13. The RFID tag of claim 12 further comprising a second erosion protection layer, the indicator layer disposed between the second erosion protection layer and the outer surface of the first erosion protection layer.

14. An article comprising an aerodynamic surface, wherein one or more RFID tags according to claim 8 or 9 or 12 is disposed on the aerodynamic surface and an erosion protection tape is disposed on the one or more RFID tags opposite the aerodynamic surface, wherein for each RFID tag, the indicator layer is encapsulated between the first erosion protection layer and the erosion protection tape.

15. A wind turbine comprising one or more rotor blades, each rotor blade being an article according to claim 6 or 14.
